# EUROPEAN PATENT SPECIFICATION

(11) **EP 1 668 088 B1**
(45) Date of publication and mention of the grant of the patent: **31.10.2007**
(21) Application number: 04779895.4
(22) Date of filing: 30.07.2004
(51) Int. Cl.: C09J 7/02, C09J 133/08, C09J 175/02, C08G 18/61, C08G 18/32, C09J 5/00

(54) **ADHESIVE ARTICLES COMPRISING A NANOPARTICLE PRIMER AND METHODS FOR PREPARING SAME**
KLEBFÄHIGE ERZEUGNISSE MIT NANOPARTIKULÄREM GRUNDIERMITTEL SOWIE VERFAHREN ZU DEREN HERSTELLUNG
ARTICLES ADHESIFS COMPRENANT UN PRIMAIRE NANOPARTICULAIRE ET PROCEDES DE PREPARATION ASSOCIES

(30) Priority: 23.09.2003 US 668748; 20.10.2003 US 689172
(43) Date of publication of application: 14.06.2006
(73) Proprietor: 3M Innovative Properties Company, St. Paul, MN 55133-3427 (US)
(72) Inventor: LUNSFORD, Duane A., Saint Paul, Minnesota 55133-3427 (US); BARAN, Jimmie R. Jr., Saint Paul, Minnesota 55133-3427 (US)
(74) Representative: von Kreisler Selting Werner
(86) International application number: PCT/US2004/024968
(87) International publication number: WO 2005/035680

(56) References cited:
- EP-A- 0 372 756
- WO-A-03/016411
- WO-A-03/068417
- JP-A- 5 230 429
- US-A- 6 103 152

## Description

### BACKGROUND

The present invention relates to adhesive articles having a nanoparticle primer layer interposed between a substrate and an adhesive layer, and to methods of making such articles.

Generally, an adhesive article comprises a substrate having an adhesive applied to at least a portion of at least one surface of the substrate. Examples of such adhesive articles include single-coated and double-coated adhesive tapes, including foam tapes.

Thermoplastic polymers comprise one broad class of materials commonly used as substrates for adhesive articles. Thermoplastic substrates include, for example, polyethylene, polypropylene, polycarbonate, polyimide, and polyesters. Foamed materials comprise another broad class of substrates for adhesive articles. Foamed materials include, for example, thermoplastic polymers, acrylics, and rubber.

There are numerous methods for treating substrate surfaces to improve the adhesion of adhesives thereto, such as chemical etching, electron-beam irradiation, corona treatment, plasma etching, coextrusion of adhesion promoting layers, and coating substrates with adhesion promoting primer coatings, some of which may be subsequently crosslinked. The desired result of these adhesion-promoting methods is to make the substrate more receptive to adhesives and to promote strong interfacial bonds between the substrate and the adhesive.

Another approach to improving the adhesion to substrates is to raise the surface energy of the surface of the substrate by the application of a primer coat or through special processing like, for example, corona treatment, that is, the exposure of the surface of the substrate to an electric discharge in air or nitrogen, whereby polar functionalities, such as hydroxyl or carboxyl are grafted onto the surface by oxidation reactions. While these treatments enhance the surface energy of most thermoplastics, including polyolefins like polypropylene and polyesters like polyethylene terephthalate (PET), this increase in surface energy is not a sufficient condition for enhanced bonding or adhesion of adhesives especially adhesives having low surface energy.

The EP 0 372 756 A discloses a pressure-sensitive or cold-seal adhesive element comprising a substrate having on at least one surface thereof a primer layer and adhered to said primer layer a pressure-sensitive or cold-seal layer, said primer layer comprising a continuous gelled network of inorganic particles containing an adhesion promoting effective amount of an ambifunctional silane.

There is a continuing need to identify improved materials and methods for increasing the adhesion between substrates and adhesives.

### SUMMARY

Briefly, in one aspect, the present invention provides an adhesive article comprising a substrate, an adhesive, and a primer. The primer consists essentially of nanoparticles and is interposed between the substrate and the adhesive.

In another aspect, the present invention provides a method for bonding an adhesive to a substrate. The method includes interposing a primer consisting essentially of nanoparticles between a first major surface of a substrate and the first major surface of an adhesive layer; adhering at least a portion of the first major surface of the foam substrate to the primer; and adhering at least a portion of the first major surface of the adhesive layer to the primer.

The details of one or more embodiments of the invention are set forth in the description below. Other features, objects, and advantages of the invention will be apparent from the description and from the claims.

### BRIEF DESCRIPTION OF THE DRAWINGS

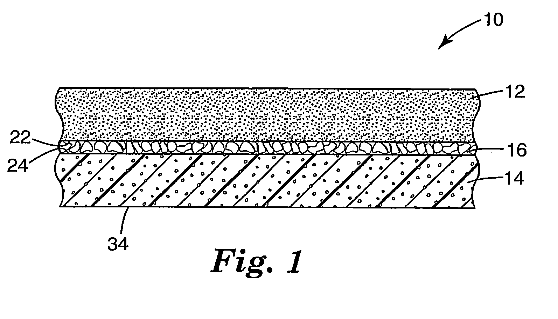

FIG. 1 is a sketch of a cross-section of an adhesive article in accordance with an embodiment of the invention.

### DETAILED DESCRIPTION

The adhesive article of the invention is a substrate having an adhesive applied to at least a portion of at least one surface of the substrate and a primer interposed between the surface of the substrate and the adhesive. The primer consists essentially of nanoparticles. Nanoparticles may be individual particles or agglomerates of particles. Generally, nanoparticles have a maximum cross-sectional dimension of less than 20 nanometers (nm) (for example, less than 10 nm, or less than 8 nm). In some embodiments, the particles are unagglomerated. If the particles are agglomerated, the maximum cross-sectional dimension of the agglomerate should be less than 20 nm (for example, less than 10 nm, or less than 8 nm). The dimensions of the nanoparticles referred to herein, are the dimensions of the nanoparticles prior to their application to a surface to form a primer (for example, the dimensions of nanoparticles or agglomerates of nanoparticles in a primer solution). After the nanoparticles have been applied to a surface (for example, by coating a primer solution onto a substrate), they may agglomerate, thus forming larger structures.

FIG. 1 shows a cross-section of adhesive article **10**. Adhesive article **10** comprises substrate **14** having first surface **24**, and adhesive layer **12** having first surface **22**. First surface **22** of adhesive layer **12** is bonded to first surface **24** of substrate **14** such that primer **16** is interposed between adhesive layer **12** and substrate **14**.

In some embodiments, a second adhesive layer (not shown) may be bonded to second surface **34** of substrate **14**. A second primer layer (not shown) may be interposed between the second adhesive layer and substrate **14**.

In some embodiments, primer **16** covers substantially all of first surface **24** of substrate **14**. In some embodiments, primer **16** covers only portions of first surface **24**. In some embodiments, primer **16** covers randomly selected portions of first surface **24**. In some embodiments, the portions of first surface **24** that are covered by primer **16** form a predetermined pattern.

In some embodiments, primer **16** covers substantially all of first surface **22** of adhesive **12**. In some embodiments, primer **16** covers only portions of first surface **22**. In some embodiments, primer **16** covers randomly selected portions of first surface **22**. In some embodiments, the portions of first surface **22** that are covered by primer **16** form a predetermined pattern.

In FIG. 1, the primer **16** is shown as a monolayer of nanoparticles. In some embodiments, the primer **16** may comprise two or more layers of nanoparticles.

The adhesive articles of the invention comprise a substrate, which may be virtually any polymeric material. The substrate may be transparent, translucent, or opaque, foamed or unfoamed, and may comprise one or more layers.

The substrate may comprise a polymeric film. The polymeric film may comprise, for example, polyolefins (for example, polyethylene, polypropylene, ethylene vinyl acetate copolymers, ethylene acrylic acid copolymers, ionomers of ethylene and mixtures thereof), polyesters (for example, polymers having terephthalate, isophthalate, and/or naphthalate co-monomer units (for example, polyethylene naphthalate (PEN), polyethylene terephthalate (PET), polybutylene naphthalate (PBN), polypropylene naphthalate (PPN), and polybutylene terephthalate (PBT))), polyimides, polystyrenes, acrylics, polyacrylates, polymethacrylates, polymethylmethacrylates, polyurethanes, urethane acrylate polymers, epoxy acrylate polymers, polyacetals, polycarbonate, polysulfone, cellulose acetate butyrate, polyvinyl chloride, and blends thereof.

The polymeric film may comprise additives such as, for example, lubricants and other melt processing aids, pigments, dyes and other colorants, ultraviolet light absorbers (that is, UVAs) supplemental ultraviolet light stabilizers, (for example, hindered amine light stabilizers (that is, HALS)), antioxidants, nucleating agents, fillers, fibers, plasticizers, whitening agents, flame retardants, antistatic and slip agents, thermally conductive particles, electrically conductive particles, continuous microfibers, and the like, and combinations thereof.

Polymeric films may be prepared by any known technique including casting or melt extrusion. The polymeric film may be embossed by any known technique.

The substrate may comprise a foam. The foam may be an open cell foam, a closed cell foam, or a combination thereof. The foam may comprise, for example, acrylic, polyolefin (for example, polyethylene, polypropylene, ethylene vinyl acetate copolymers, ethylene acrylic acid copolymers, ionomers of ethylene and mixtures thereof), polyurethane, rubber, silicone, or blends thereof. Examples of acrylic foams are disclosed in U.S. Patent No. 4,415,615 (Esmay et al.) and in U.S. Patent No. 6,103,152 (Gehlsen et al.). The foams may contain additives such as tackifiers, plasticizers, pigments, dyes, expandable and non-expandable microspheres, physical blowing agents, chemical blowing agents, foam stabilizers, surfactants, reinforcing agents, hydrophobic or hydrophilic metal oxides, calcium carbonate, toughening agents, thermally conductive particles, electrically conductive particles, fire retardants, antioxidants, finely ground polymeric particles, stabilizers, continuous microfibers, and combinations thereof.

Foams may be prepared by forming gas voids in a composition using a variety of mechanisms including, for example, mechanical mechanisms, chemical mechanisms, and combinations thereof.

Useful mechanical foaming mechanisms include, for example, agitating (for example, shaking, stirring, or whipping the composition, and combinations thereof), injecting gas into the composition (for example, inserting a nozzle beneath the surface of the composition and blowing gas into the composition), and combinations thereof.

Useful chemical foaming mechanisms include, for example, producing gas *in situ* through a chemical reaction, decomposition of a component of the composition including, for example, a component that liberates gas upon thermal decomposition, evaporating a component of the composition including, for example, a liquid gas, volatilizing a gas in the composition by decreasing the pressure on the composition or heating the composition, and combinations thereof.

In principle, any foaming agent may be used to foam the composition including, for example, chemical foaming agents and physical foaming agents including, for example, inorganic and organic foaming agents.

Examples of chemical foaming agents include water and azo-, carbonate- and hydrazide-based molecules including, for example, 4,4'-oxybis (benzenesulfonyl)hydrazide, 4,4'-oxybenzenesulfonyl semicarbazide, azodicarbonamide, p-toluenesulfonyl semicarbazide, barium azodicarboxylate, azodiisobutyronitrile, benzenesulfonhydrazide, trihydrazinotriazine, metal salts of azodicarboxylic acids, oxalic acid hydrazide, hydrazocarboxylates, diphenyloxide-4,4'-disulphohydrazide, tetrazole compounds, sodium bicarbonate, ammonium bicarbonate, preparations of carbonate compounds and polycarbonic acids, and mixtures of citric acid and sodium bicarbonate, N,N'-dimethyl-N,N'-dinitroso-terephthalamide, N,N'-dinitrosopentamethylenetetramine, and combinations thereof.

Suitable inorganic physical foaming agents include, for example, nitrogen, argon, oxygen, water, air, helium, sulfur hexafluoride and combinations thereof.

Useful organic physical foaming agents include, for example, carbon dioxide, aliphatic hydrocarbons, aliphatic alcohols, fully and partially halogenated aliphatic hydrocarbons including, for example, methylene chloride, and combinations thereof. Examples of suitable aliphatic hydrocarbon foaming agents include, for example, members of the alkane series of hydrocarbons including, for example, methane, ethane, propane, n-butane, isobutane, n-pentane, isopentane and blends thereof. Useful aliphatic alcohols include, for example, methanol, ethanol, n-propanol, and isopropanol and combinations thereof. Suitable fully and partially halogenated aliphatic hydrocarbons include, for example, fluorocarbons, chlorocarbons, and chlorofluorocarbons and combinations thereof.

Examples of fluorocarbon foaming agents include, for example, methyl fluoride, perfluoromethane, ethyl fluoride, 1,1-difluoroethane (HFC-152a), fluoroethane (HFC-161), 1,1,1-trifluoroethane (HFC-143a), 1,1,1,2-tetrafluoroethane (HFC-134a), 1,1,2,2 tetrafluoroethane (HFC-134), 1,1,1,3,3-pentafluoropropane, pentafluoroethane (HFC-125), difluoromethane (HFC-32), perfluoroethane, 2,2-difluoropropane, 1,1,1-trifluoropropane, perfluoropropane, dichloropropane, difluoropropane, perfluorobutane, perfluorocyclobutane and combinations thereof.

Useful partially halogenated chlorocarbon and chlorofluorocarbon foaming agents include, for example, methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123) and 1-chloro-1,2,2,2-tetrafluoroethane (HCFC-124) and combinations thereof.

Examples of useful fully halogenated chlorofluorocarbons include, for example, trichloromonofluoromethane (CFC-11), dichlorodifluoromethane (CFC-12), trichloro-trifluoroethane (CFC-113), dichlorotetrafluoroethane (CFC-114), chloroheptafluoropropane and dichlorohexafluoropropane and combinations thereof.

The foaming agents may be used as single components, in mixtures and combinations thereof, as well as in mixtures with other co-foaming agents. The foaming agent is added to the composition in an amount sufficient to achieve a desired foam density.

In some embodiments, a nucleating agent may also be present. A nucleating agent can be any conventional nucleating agent. The amount of nucleating agent to be added depends upon the desired cell size, the selected foaming agent and the density of the composition being foamed. Examples of inorganic nucleating agents in small particulate form include clay, talc, silica, and diatomaceous earth. Organic nucleating agents can decompose or react at a given temperature.

One example of an organic nucleating agent is a combination of an alkali metal salt of a polycarboxylic acid with a carbonate or bicarbonate. Examples of useful alkali metal salts of a polycarboxylic acid include the monosodium salt of 2,3-dihydroxy-butanedioic acid (that is, sodium hydrogen tartrate), the monopotassium salt of butanedioic acid (that is, potassium hydrogen succinate), the trisodium and tripotassium salts of 2-hydroxy-1,2,3-propanetricarboxylic acid (that is, sodium and potassium citrate, respectively), and the disodium salt of ethanedioic acid (that is, sodium oxalate) and polycarboxylic acid such as 2-hydroxy-1,2,3-propanetricarboxylic acid, and combinations thereof. Examples of carbonate and bicarbonate include sodium carbonate, sodium bicarbonate, potassium bicarbonate, potassium carbonate and calcium carbonate and combinations thereof. One contemplated combination is a monoalkali metal salt of a polycarboxylic acid, such as monosodium citrate or monosodium tartrate, with a carbonate or bicarbonate. It is contemplated that mixtures of different nucleating agents may be added. Other useful nucleating agents include a stoichiometric mixture of citric acid and sodium bicarbonate.

In some embodiments, foams may be formed by blending expanded microspheres into a composition. In some embodiments, foams may be formed by blending expandable microspheres into a composition and expanding the microspheres.

An expandable polymeric microsphere comprises a polymer shell and a core material in the form of a gas, liquid, or combination thereof. Upon heating to a temperature at or below the melt or flow temperature of the polymeric shell, the polymer shell will expand. Examples of suitable core materials include propane, butane, pentane, isobutane, neopentane, isopentane or a similar material and combinations thereof. The identity of the thermoplastic resin used for the polymer microsphere shell can influence the mechanical properties of the foam, and the properties of the foam may be adjusted by the choice of microsphere, or by using mixtures of different types of microspheres. For example, acrylonitrile-containing resins are useful where high tensile and cohesive strength are desired in a low-density foam article. This is especially true where the acrylonitrile content is at least 50% by weight of the resin used in the polymer shell, generally at least 60% by weight, and typically at least 70% by weight.

Examples of suitable thermoplastic resins that may be used as the expandable microsphere shell include acrylic and methacrylic acid esters such as polyacrylate; acrylate-acrylonitrile copolymer; and methacrylate-acrylic acid copolymer. Vinylidene chloride-containing polymers such as vinylidene chloride-methacrylate copolymer, vinylidene chloride-acrylonitrile copolymer, acrylonitrile-vinylidene chloride-methacrylonitrile-methyl acrylate copolymer, and acrylonitrile-vinylidene chloride-methacrylonitrile-methyl methacrylate copolymer may also be used, but may not be desired if high strength is sought. In general, where high strength is desired, the microsphere shell will have no more than 20% by weight vinylidene chloride and typically no more than 15% by weight vinylidene chloride. High strength applications may require microspheres with essentially no vinylidene chloride. Halogen free microspheres may also be used in the foams of the invention.

Examples of commercially available expandable microspheres include those available under the trade designations F30D, F80SD, and F100 from Pierce Stevens, located in Buffalo, New York, and EXPANCEL 551, EXPANCEL 461, and EXPANCEL 091, from Expancel, Inc., located in Duluth, Georgia.

The adhesive articles of the present invention comprise an adhesive layer. A variety of different polymer resins, as well as blends thereof, are suitable for use in the adhesive layer. In some embodiments, the adhesive layer may be a pressure sensitive adhesive (PSA). In some embodiments, the adhesive layer may be a non-PSA, such as, for example, a heat-activated adhesive.

In some embodiments, it may be desirable to blend two or more acrylate polymers having different chemical compositions. A wide range of physical properties can be obtained by manipulation of the type and concentration of the blend components.

One class of polymers useful for the adhesive layer includes acrylate and methacrylate polymers and copolymers. Such polymers are formed, for example, by polymerizing one or more monomeric acrylic or methacrylic esters of non-tertiary alkyl alcohols, with the alkyl groups having from 1 to about 20 carbon atoms (for example, from 3 to 18 carbon atoms). Suitable acrylate monomers include, for example, methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, and dodecyl acrylate. The corresponding methacrylates are useful as well. Also useful are aromatic acrylates and methacrylates, for example, benzyl acrylate and cyclobenzyl acrylate.

Optionally, one or more monoethylenically unsaturated co-monomers may be polymerized with the acrylate or methacrylate monomers. The particular type and amount of co-monomer is selected based upon the desired properties of the polymer. One group of useful co-monomers includes those having a homopolymer glass transition temperature greater than the glass transition temperature of the (meth)acrylate (that is, acrylate or methacrylate) homopolymer. Examples of suitable co-monomers falling within this group include acrylic acid, acrylamides, methacrylamides, substituted acrylamides (such as N,N-dimethyl acrylamide), itaconic acid, methacrylic acid, acrylonitrile, methacrylonitrile, vinyl acetate, N-vinyl pyrrolidone, isobornyl acrylate, cyano ethyl acrylate, N-vinylcaprolactam, maleic anhydride, hydroxyalkyl(meth)-acrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids (for example, those available from Union Carbide Corp. of Danbury, Connecticut, under the designation VYNATES), vinylidene chloride, styrene, vinyl toluene, and alkyl vinyl ethers.

A second group of monoethylenically unsaturated co-monomers that may be polymerized with the acrylate or methacrylate monomers includes those having a homopolymer glass transition temperature (Tg) less than the glass transition temperature of the acrylate homopolymer. Examples of suitable co-monomers falling within this class include ethoxyethoxyethyl acrylate (Tg= -71 degrees Celsius) and a methoxypolyethylene glycol 400 acrylate (Tg= -65 degrees Celsius; available from Shin Nakamura Chemical Co., Ltd. Japan, under the designation "NK Ester AM-90G").

A second class of polymers useful in the adhesive layer includes semicrystalline polymer resins, such as polyolefins and polyolefin copolymers (for example, polymer resins based upon monomers having between about 2 and about 8 carbon atoms, such as low-density polyethylene, high-density polyethylene, polypropylene, ethylene-propylene copolymers, etc.), polyesters and co-polyesters, polyamides and co-polyamides, fluorinated homopolymers and copolymers, polyalkylene oxides (for example, polyethylene oxide and polypropylene oxide), polyvinyl alcohol, ionomers (for example, ethylene-methacrylic acid copolymers neutralized with a base), and cellulose acetate. Other examples of polymers in this class include amorphous polymers such as polyacrylonitrile, polyvinyl chloride, thermoplastic polyurethanes, aromatic epoxies, polycarbonates, amorphous polyesters, amorphous polyamides, acrylonitrile-butadienestyrene (ABS) block copolymers, polyphenylene oxide alloys, ionomers (for example, ethylene-methacrylic acid copolymers neutralized with salt), fluorinated elastomers, and polydimethyl siloxane.

A third class of polymers useful in the adhesive layer includes elastomers containing ultraviolet radiation-activatable groups. Examples include polybutadiene, polyisoprene, polychloroprene, random and block copolymers of styrene and dienes (for example, SBR), and ethylene-propylene-diene monomer rubber. This class of polymer is typically combined with tackifying resins.

A fourth class of polymers useful in the adhesive layer includes pressure sensitive and hot melt applied adhesives prepared from non-photopolymerizable monomers. Such polymers can be adhesive polymers (that is, polymers that are inherently adhesive), or polymers that are not inherently adhesive but are capable of forming adhesive compositions when compounded with components such as plasticizers, or tackifiers. Specific examples include poly-alpha-olefins (for example, polyoctene, polyhexene, and atactic polypropylene), block copolymers, natural and synthetic rubbers, silicones, ethylene-vinyl acetate, and epoxy-containing structural polymer blends (for example, epoxy-acrylate and epoxy-polyester blends).

In some embodiments, it may be desirable to use a silicone pressure sensitive adhesive. Useful silicone pressure sensitive adhesive materials include those described in Handbook of Pressure Sensitive Adhesive Technology, 2nd Ed., 1989, Chapter 18, pages 508-517. Silicone adhesives are, in general terms, blends of (i) polydiorganosiloxanes (also referred to as silicone gums typically having a number average molecular weight of about 5000 to about 10,000,000 preferably about 50,000 to about 1,000,000) with (ii) copolymeric silicone resins (also referred to as MQ resins typically having a number average molecular weight of about 100 to about 1,000,000, preferably about 500 to about 50,000) comprising triorganosiloxy units and SiO_{4/2} units. Preferably, silicone adhesives comprise from about 20 to about 60 parts by weight silicone gum and, correspondingly, from about 40 parts to about 80 parts by weight of an MQ resin. It is beneficial, in terms of improving adhesive properties, to provide a chemical means of reacting the copolymeric silicone resin with the polydiorganosiloxane. To achieve such a reaction, both condensation chemistry and addition-cure chemistry have been used.

In some embodiments, it may be desirable to use a silicone pressure sensitive adhesive comprising a polydiorganosiloxane polyurea copolymer and a silicone tackifying resin with little or no silanol (Si-OH) functionality, such as those described in U.S. Patent No. 6,730,397.

In other embodiments, it may be desirable that the adhesive have good adhesion to low energy surfaces (for example, polyolefins), such as those adhesives disclosed in U.S. Patent No. 5,708,110. In some embodiments, the adhesive may be prepared by polymerizing a blend of monomers comprising less than about 5% (for example, less than about 3%, or less than about 1%, or essentially 0%) by weight of polar ethylenically unsaturated monomers. Examples of such polar monomers include acrylic acid, itaconic acid, certain substituted acrylamides such as N,N dimethylacrylamide, N-vinyl-2-pyrrolidone, N-vinyl caprolactam, acrylonitrile, tetrahydrofurfuryl acrylate, glycidyl acrylate, 2-phenoxyethylacrylate, and benzylacrylate, or combinations thereof.

In some embodiments, it may be desirable to use an adhesive comprising no more than about 5% (for example, no more than about 3%, or no more than about 1%, or essentially 0%) by weight acrylic acid repeat units.

The adhesive layer may also optionally have other components in it. Normal additives, such as fillers, antioxidants, viscosity modifiers, pigments, tackifying resins, fibers, flame retardants, antistatic and slip agents, thermally conductive particles, electrically conductive particles, continuous microfibers, scrims, webs, filaments, and the like can also be added to the adhesive layer, to the extent that they do not alter the desired properties of the final product.

The thickness of the adhesive layer varies depending on the use of the product. In some embodiments, the thickness of the adhesive layer is greater than about 250 microns (for example, greater than about 500 microns).

The primer of the invention consists essentially of nanoparticles. As used herein, the term "consists essentially of" means free of an effective amount of a component that reacts with the adhesive or the substrate (that is, ambifunctional silane), and /or any polymeric binders that act to increase the adhesion of the adhesive to the substrate.

The nanoparticles of the invention may be virtually any inorganic particle having a maximum cross-sectional dimension of less than 20 nm (for example, less than 10 nm, or less than 8 nm). Particle size can be measured using transmission electron microscopy or light scattering techniques to count the number of particles of a given diameter. In some embodiments, the particles are unagglomerated. If the primary particles form agglomerates, it may be desirable to limit the maximum cross-sectional dimension of the agglomerate to less than 20 nm (for example, less than 10 nm, or less than 8 nm).

In some embodiments, it may be desirable to derive the inorganic particles of the primer from a sol rather than a powder. Powders may result in an intractable mass that is unsuitable for the primer. Generally, a sol is a colloidal dispersion of substantially non-aggregated, inorganic particles in a liquid medium.

Exemplary nanoparticle sols include alumina, titania, zirconia, ceria, silica, iron and antimony oxide sols and iron sulfide sols.

Silica sols useful for preparing primer compositions can be prepared by methods well known in the art. Colloidal silicas dispersed as sols in aqueous solutions are also available commercially under such trade names as LUDOX (E.I. DuPont de Nemours and Co., Wilmington, Delaware), NYACOL (Nyacol Co., Ashland, Massachusetts), and NALCO 2326 and 2327 (Ondeo Nalco Chemical Co., Oak Brook, Illinois). Nonaqueous silica sols (also called silica organosols) are also commercially available under the trade names NALCO 1057 (a silica sol in 2-propoxyethanol, Ondeo Nalco Chemical Co.), MAST, IP-ST, and EG-ST (Nissan Chemical Ind., Tokyo, Japan) and HIGHLINK OG Silica Organosols (Clariant Corporation, Charlotte, North Carolina). Additional examples of suitable colloidal silicas are described in U.S. Patent No. 5,126,394 (Bilkadi).

Alumina, titania, zirconia, ceria, and antimony oxide sols, are all available commercially from suppliers such as Nyacol Co. and Ondeo Nalco Chemical Co.

The nanoparticles used in the invention may be acid stabilized, sodium stabilized, or ammonia stabilized. In some embodiments, it may be desirable to adjust the pH of a sol.

In some embodiments, the nanoparticles may be surface-modified. A surface-modified nanoparticle is a particle that includes surface groups attached to the surface of the particle. The surface groups modify the character of the particle. In some embodiments, the surface groups may render the nanoparticles hydrophobic. In some embodiments, the surface groups may render the nanoparticles hydrophilic. The surface groups may be selected to provide a statistically averaged, randomly surface-modified particle. In some embodiments, the surface groups are present in an amount sufficient to form a monolayer, preferably a continuous monolayer, on the surface of the particle.

Surface modifying groups may be derived from surface modifying agents. Schematically, surface modifying agents can be represented by the formula A-B, where the A group is capable of attaching to the surface of the particle and the B group is a compatibilizing group that does not react with other components in the system (for example, the adhesive and/or the substrate). Compatibilizing groups can be selected to render the particle relatively more polar, relatively less polar or relatively non-polar.

Suitable classes of surface-modifying agents include, for example, silanes, organic acids, organic bases and alcohols.

Particularly useful surface-modifying agents include silanes. Examples of useful silanes include organosilanes including, for example, alkylchlorosilanes; alkoxysilanes, for example, methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, butyltrimethoxysilane, butyltriethoxysilane, hexyltrimethoxysilane, octyltrimethoxysilane, 3-mercaptopropyltrimethoxysilane, n-octyltriethoxysilane, phenyltriethoxysilane, polytriethoxysilane; trialkoxyarylsilanes; isooctyltrimethoxy-silane; N-(3-triethoxysilylpropyl) methoxyethoxyethoxy ethyl carbamate; N-(3-triethoxysilylpropyl) methoxyethoxyethoxyethyl carbamate; polydialkylsiloxanes including, for example, polydimethylsiloxane; arylsilanes including, for example, substituted and unsubstituted arylsilanes; alkylsilanes including, for example, substituted and unsubstituted alkyl silanes including, for example, methoxy and hydroxy substituted alkyl silanes; and combinations thereof.

Useful organic acid surface-modifying agents include, for example, oxyacids of carbon (for example, carboxylic acid), sulfur and phosphorus, and combinations thereof.

Representative examples of polar surface-modifying agents having carboxylic acid functionality include CH₃O(CH₂CH₂O)₂CH₂COOH (hereafter MEEAA) and 2-(2-methoxyethoxy)acetic acid having the chemical structure CH₃OCH₂CH₂OCH₂COOH (hereafter MEAA) and mono(polyethylene glycol) succinate.

Representative examples of non-polar surface-modifying agents having carboxylic acid functionality include octanoic acid, dodecanoic acid and stearic acid.

Examples of suitable phosphorus containing acids include phosphonic acids including, for example, octylphosphonic acid, laurylphosphonic acid, decylphosphonic acid, dodecylphosphonic acid and octadecylphosphonic acid.

Useful organic base surface-modifying agents include, for example, alkylamines including, for example, octylamine, decylamine, dodecylamine and octadecylamine.

Examples of suitable surface-modifying alcohols include, for example, aliphatic alcohols including, for example, octadecyl, dodecyl, lauryl and furfuryl alcohol, alicyclic alcohols including, for example, cyclohexanol, and aromatic alcohols including, for example, phenol and benzyl alcohol, and combinations thereof.

Useful surface-modifying groups can include an aromatic ring, for example, those surface-modifying groups disclosed in U.S. Patent No. 5,648,407 (Goetz et al.).

A variety of methods are available for modifying the surface of nanoparticles including, for example, adding a surface modifying agent to nanoparticles (for example, in the form of a powder or a colloidal dispersion) and allowing the surface modifying agent to react with the nanoparticles. Other useful surface modification processes are described in, for example, U.S. Patent Nos. 2,801,185 (ller) and 4,522,958 (Das et al.).

In some embodiments, the primer may be provided as a primer solution comprising nanoparticles having a maximum cross-sectional dimension of less than 20 nm (for example, less than 15 nm, or less than 10 nm, or less than 8 nm). The nanoparticles may be dispersed in any suitable solvent including, for example, water, alcohol (for example, methanol, ethanol, isopropanol), organic solvents (for example, toluene), or combinations thereof.

In some embodiments, the primer solution contains at least 0.1 (for example, at least 0.5) weight percent nanoparticles. In some embodiments, the primer solution contains less than 5 (for example, less than 2, or less than 1.5) weight percent nanoparticles. The primer solution may contain one or more species of nanoparticles.

The primer solution may optionally include additives, provided that such additives do not substantially react with the adhesive or the substrate. Additionally, the primer is substantially free of any polymeric binders that react with the adhesive or the substrate.

The primer solution may optionally contain a surfactant to improve wettability of the solution on the substrate, but inclusion of an excessive amount of surfactant may reduce the adhesion properties of the primer. Useful surfactants include, for example, TERGITOL TMN-6 (available from Dow Chemical, located in Midland, Michigan), and FLUORAD FC-4430 and FC-4432 (available from 3M Company, located in St. Paul, Minnesota).

The solution may be applied by standard techniques such as bar coating, roll coating, curtain coating, rotogravure coating, pattern coating, screen printing, spraying, jetting, brushing and dipping. The substrate may be treated prior to the application of the primer solution. Various known treatment techniques include, for example, corona discharge, flame treatment, and electron beam. Generally, no pretreatment is required.

In some embodiments, the nanoparticle containing solution may be applied to the surface of the substrate that will be contacted with the adhesive. In some embodiments, the nanoparticle containing solution may be applied to the surface of the adhesive that will be contacted with the substrate. The solution may be dried at a moderately low temperature, generally less than about 90°C, preferably between about 60°C and 80°C, to remove water, organic solvents, diluents, and the like. The coating may also be dried at room temperature. In some embodiments, the drying temperature may be greater than 90°C. Generally, the drying temperature at drying time should be selected such that the surface to which the primer solution was applied does not substantially degrade.

The wet thickness of the applied primer solution is dependent on the concentration of the nanoparticles and the desired dry thickness of the primer layer. In some embodiments, the primer layer comprises a monolayer of nanoparticles. Generally, the primer layer should be as thin as possible, as thicker layers of nanoparticles may lack sufficient cohesive strength and may split, resulting in undesirable adhesive transfer to a substrate when the adhesive article is removed. In some embodiments, thicker layers of nanoparticles (for example, two layers, or three layers, or more than three layers) may be used, provided the nanoparticle layers have sufficient cohesive strength to prevent substantial adhesive transfer to a substrate when the adhesive article is removed.

Once the primer layer has been formed on a substrate, an adhesive layer may be applied to the substrate by any applicable conventional method such as, for example, bar coating, roll coating, curtain coating, rotogravure coating, pattern coating, screen-printing, spraying, brushing, laminating, and extruding.

If the dry primer layer has been formed on an adhesive layer, then the adhesive layer may be applied to a substrate by any applicable conventional method such as by laminating. In some embodiments, the substrate may be applied to the primed adhesive layer by, for example, bar coating, roll coating, curtain coating, rotogravure coating, pattern coating, screen-printing, spraying, brushing, and extruding.

The adhesive articles of the invention may include other components including, for example, scrims, films, tissues and combinations thereof, dispersed in the substrate or disposed in a layered construction with the substrate in the form of, for example, alternating layers, interpenetrating layers and combinations thereof. Other useful constructions include multi-layer constructions that include layers of foam or film or adhesive where the layers differ in at least one property including, for example, density and composition.

The adhesive articles of the invention can also be subjected to post processes including, for example, die cutting, crosslinking and sterilization.

The adhesive articles of the invention have a variety of useful applications including, for example, bonding two substrates together, mounting applications using articles including, for example, hooks, hangers, reclosable fasteners, decorative articles, for example trim articles, and holders, joining applications including, for example, adhering two or more containers, for example, boxes, together for later separation, bonding articles to surfaces including, for example, walls, floors, ceilings and counters and replacing mechanical fasteners, mastics, or liquid glues. The articles of the invention are also useful in automotive, electronic, and/or construction applications such as sealers, gaskets, spacers, vibration dampers, noise dampers, and shock dampers.

The following specific, but non-limiting, examples will serve to illustrate the invention. In these examples, all percentages are parts by weight unless otherwise indicated.

### EXAMPLES

### TEST METHODS

### 90 Degree Peel

A 51 mm (two inch (in.)) wide by about 127 mm (5 in.) long polypropylene panel (available from Aeromat Plastics, located in Burnsville, Minnesota) was solvent-washed with a solution of 50:50 by volume isopropyl alcohol: water, and dried. A 0.025 mm (0.001 in.) thick by 31.8 mm (1.25 in.) wide polyester film was placed on the polypropylene panel so that the film covered about 12.7 mm (0.5 in.) of one end of the panel, in order to form a tab at the starting end of the test specimen.

A 12.7 mm (0.5 in.) wide by about 115 mm (4.5 in.) long sample was cut from the article to be tested and placed along the length of one side of the test panel. The sample overlapped the polyester film by about 12.7 mm (0.5 in.) and did not extend beyond the edge of the panel. Similarly, a second test specimen of the same article was laminated to the test panel along the remaining side of the test panel and parallel to the first test specimen. Either a 0.051 mm (0.002 in.) thick by 15.9 mm (0.625 in.) polyester film or the matte side of a 0.13mm (0.005 in.) thick by about 28.6 mm (1.125 in.) wide by about 200 mm (8 in.) long piece of aluminum foil was placed on the exposed side of each test specimen. The laminates were rolled down onto the panel using a 6.8 kg (15 lb.) steel roller, with one pass in each direction. Care was taken not to trap bubbles between the panel and the laminates.

The bonded test panel thus prepared was allowed to dwell at room temperature (about 22°C) for about 72 hours. Then each sample was tested at room temperature (about 22°C) for 90 Degree Peel Adhesion at a crosshead speed of 305 mm/min (12 in./min) using an Instron Model 4465 tester (available from Instron, located in Canton, Massachusetts). For each sample, an average peel value was recorded, ignoring the peel value obtained from the first and last 25.4 mm (1 in.) length of peel. The values reported herein are the average peel adhesion value of two replicates.

### 180 Degree T-Peel

A 12.7 mm (0.5 in.) wide by about 51 mm (2 in.) long sample was placed between two strips of about 15.9 mm (0.625 in.) wide by 127 mm (5 in.) long by 0.051 mm (0.002 in.) thick primed polyester (PET) film, leaving an adhesive-free 76 mm (3 in.) tab at one end of the PET strips. The assembly was rolled down with a 6.8 kg (15 lb.) steel roller with one pass forward and one pass backward. The assembly was conditioned at room temperature (about 22°C) for 24 hours. The tabs were bent back at 90° in opposite directions and one tab was clamped in the upper jaw and the other tab clamped in the lower jaw of an Instron Model 4465 tensile testing machine. The jaws were separated at 2.54 mm/min (0.1 in./min). The force required to pull apart the tabs was recorded in pounds per inch width and converted to Newtons per centimeter width (N/cm). For each sample, an average peel value was recorded, ignoring the peel value obtained from the first and last 25.4 mm (1 in.) length of peel. The values reported herein are the average peel adhesion value of two replicates.

### 70°C Shear

A 51 mm (2 in.) wide by 76 mm (3 in.) long, type 302 or 304 stainless steel (SS) panel and a 13 mm (0.5 in.) wide by 51 mm (2 in.) long by 1.6 mm (0.0625 in.) thick type 302 or 304 SS strap were solvent-washed (one wash of methyl ethyl ketone followed by one wash of 50:50 isopropyl alcohol:water and three washes of acetone), and dried. The strap had a hole centered at one end.

A sample was cut from the article to be tested and placed onto the end of SS strap opposite the end having the hole. The sample was placed such that it overlapped 25 mm (1 in.) of the length of the strap. The sample was trimmed to the side edges and the end of the strap to provide an applied area of 13 mm (0.5 in.) by 25 mm (1 in.). The sample was rubbed down with moderate thumb pressure to ensure good bonding between the sample and the strap and then the liner was removed.

The strap with the sample attached was then applied to the SS panel so that the sample was sandwiched between the strap and the panel, with the hole-containing end extending beyond the panel; the edge along the length of the strap was parallel to the edge along the length of the end of the panel. The distance between the non-hole containing edge along the width of the strap and the closest panel width edge was 31.8 mm (1.25 in.).

The prepared test specimen was laid on a horizontal surface and a 1000 gram weight was placed over the bonded area to apply pressure to the bonded area in order to maximize wet-out of the panel and strap by the sample. Under this condition, the test specimen was allowed to dwell at room temperature (about 22°C) for approximately fifteen minutes. The weight was then removed, and the sample was allowed to dwell for an additional 24 hours at room temperature.

The test specimen was then placed in a Static Shear stand (Model DL 433L, available from Crex Research Systems, Mahtomedi, Minnesota). The fixture and specimen were then placed in a forced air oven set at 70°C (158°F) for 10 minute before attaching a 500 gram weight to the hole on the strap. The test was run at 70°C until the test specimen failed or about 10,000 minutes elapsed. Failure time and failure mode were recorded.

### MATERIALS

| Component | Description | Source |
|---|---|---|
| CeO₂ | Approx. 8-10 nm acid-stabilized ceria | Rhodia Inc, |
| | particles | Shelton, Connecticut |
| F-50D | thermally-expandable microspheres | Pierce and Stevens, |
| | | Buffalo, New York |
| FC-4430 | fluorochemical surfactant | 3M Company |
| FC-4432 | fluorochemical surfactant | 3M Company |
| Fe₂O₃ | Approx. 5 nm acid-stabilized ferric oxide particles | prepared as described |
| HDDA | 1,6-hexanediol diacrylate | Sartomer, Ridgefield Park, New Jersey |
| IBOA | isobornyl acrylate | San Esters Corporation, New York, New York |
| IOA | isooctylacrylate | |
| IPA | isopropyl alcohol | |
| NALCO 2326 | 5 nanometer (nm) ammonium-stabilized colloidal silica, hydrophobic particles, 15 % solids. | Ondeo Nalco Chemical Co., Bedford Park, Illinois |
| NALCO 2327 | 20 nm ammonium-stabilized colloidal silica, hydrophobic particles, 40% solids. | Ondeo Nalco Chemical Co. |
| NALCO 2329 | 75 nm ammonium-stabilized colloidal silica, hydrophobic particles, 40% solids. | Ondeo Nalco Chemical Co. |

### Ferric Oxide Particles

One thousand milliliters (mL) of a 1.875 M ammonium bicarbonate solution were added dropwise with rapid stirring to a 2000 mL solution of 0.375 M iron nitrate nonahydrate. Gas was evolved as the acidic iron nitrate solution hydrolyzed the bicarbonate ion. The solution changed from a yellowish orange to a very deep burgundy color during the course of the addition. After the addition was complete, the solution was dialyzed against deionized water by passing the deionized water slowly through a dialysis tube (approximately one meter in length, 1000 MWCO Spectra/Por (Spectrum Laboratories, Inc., Savannah, Georgia) immersed in a stirred solution of the hydrolyzed ferric nitrate. After dialyzing with about 5 equivalents volumes of deionized water, the solution of the hydrolyzed iron oxide nanoparticles was heated to about 65°C during the remainder of the dialysis. Dialysis was continued using an additional 7 equivalent volumes of deionized water. The pH at this point was about 2.5 - 3.0.

### Surface Modification of silica nanoparticles

### SILICA-1

Surface modified silica nanoparticles in which the particle surface was hydrophobically modified using trialkoxysilane coupling agents were prepared as follows:

Seventy-five grams (g) of NALCO 2326 was weighed into a 500 mL round bottom 3-neck flask, equipped with a mechanical stirrer and a reflux condenser. A solution of 4.61 g isooctyltrimethoxysilane and 50 g 1-methoxy-2-propanol was prepared separately in a beaker.

The isooctyltrimethoxysilane/methoxypropanol solution was added to the flask containing NALCO 2326 via the open port while the NALCO 2326 sol was stirred. The beaker was then rinsed with an additional 34.4 g of 1-methoxy-2-propanol, which was subsequently added to the stirred mixture After complete addition, the open port in the flask was stoppered and the flask placed in an oil bath The oil bath was then heated to 80°C and the reaction was allowed to proceed for about 20 hours. The resultant sol was dried in a flow-through oven at 150°C. 13.14 g of a powdery white solid was recovered.

### SILICA - 2

143.86 g of tris(2-methoxyethoxy)vinylsilane and 76.14 g pentamethyldisiloxane were combined with mixing in 145 g heptane. One drop of a catalyst (platinum (0) divinyltetramethyldisiloxane (as prepared in Example 1 of U.S. Patent No. 3,814,730) was added to 0.3 g heptane, and 0.1 g of this solution was added to the above reaction mixture, which was then allowed to stir, without heating, overnight. The reaction continued until the disappearance of Si-H peak as determined by 1H NMR. Heptane was removed by evaporation under reduced pressure to give SILANE COUPLING AGENT A.

Seventy-five g of NALCO 2326 was weighed into a 500 mL round bottom 3-neck flask, equipped with a mechanical stirrer and a reflux condenser. A solution of 3.26 g isooctyltrimethoxysilane, 5.98 g of SILANE COUPLING AGENT A and 100 g 1-methoxy-2-propanol was prepared separately in a beaker. The silane/methoxypropanol solution was added into the flask via the open port while the NALCO 2326 sol was stirred. The beaker was then rinsed with an additional 45.5 g of 1-methoxy-2-propanol, which was subsequently added to the stirred mixture. After complete addition, the open port in the flask was stoppered and the flask placed in an oil bath. The oil bath was then heated to 80°C and the reaction allowed to proceed for about 20 hours. The sol was then dried in a flow through oven at 150°C. 14.24 g of a powdery white solid was recovered.

### Summary of Primers

| | **Nanoparticles** | | | | |
|---|---|---|---|---|---|
| **Primer** | **particle** | **size (nm)** | **%** | **solution** | **surfactant** |
| P-I | NALCO 2326 | 5 | 1.5 | 1 part NALCO 2326 + 9 parts Ethanol | none |
| P-II | NALCO 2327 | 20 | 1.5 | 1 part NALCO 2326 + 9 parts Ethanol | none |
| P-III | NALCO 2329 | 75 | 1.5 | 1 part NALCO 2326 + 9 parts Ethanol | none |
| P-IV | none | | | 1% NH4OH in Ethanol | none |
| P-V | Ce₂O₃ | 8 | 1.5 | 2 parts Ce₂O₃ + 25 parts Ethanol | none |
| P-VI | Fe₂O₃ | 5 | 0.75 | Ethanol | none |
| P-VII | Fe₂O₃ | 5 | 0.5 | Ethanol | none |
| P-VIII | Fe₂O₃ | 5 | 1.5 | Ethanol | none |
| P-IX | NALCO 2326 | 5 | 1.5 | 1 part NALCO 2326 + 9 parts Water | 0.5% FC-4430 |
| P-X | Fe₂O₃ | 5 | 1.5 | Water | 1.0% FC-4430 |
| P-XI | Fe₂O₃ | 5 | 1.5 | Ethanol | 1.0% FC-4432 |
| P-XII | Fe₂O₃ | 5 | 0.4 | Ethanol | none |
| P-XIII | SILICA-1 | 5 | 1.75 | 80/20 toluene/IPA | none |
| P-XIV | SILICA-2 | 5 | 1.75 | 80/20 toluene/IPA | none |
| P-XV | SILICA-1 | 5 | 2 | 80/20 toluene/IPA | none |
| P-XVI | SILICA-2 | 5 | 2 | 80/20 toluene/IPA | none |

### Adhesives

### Adhesive I (A-I)

A Silicone Polyurea Polymer solution was prepared by charging 98 parts of an approximately 32,300 number average molecular weight polydimethylsiloxane diamine (prepared as described in Example 2 of U.S. Patent No. 5, 461,134), 0.35 part 2-methyl-1,5-pentanediamine (available under the trade name DYTEK A, from E.I. duPont de Nemours, located in Wilmington, Delaware), 209.7 parts toluene, and 89.9 parts 2-propanol to a reaction vessel fitted with mechanical stirrer, heating mantle, thermometer, reflux condenser and nitrogen atmosphere. The reaction vessel was sealed and heated to 110°C for 30 minutes, cooled to 80°C and degassed by sweeping the headspace of the reaction vessel with a stream of nitrogen gas until the vessel temperature reached 50°C at which time the reactor was again sealed.

With the reaction vessel maintained at 50°C, 1.48 parts methylene bis(4-cyclohexylisocyanate) (available under the trade name DESMODUR W, from Bayer, located in Pittsburgh, Pennsylvania) was charged to the vessel and allowed to react for 2 hours. A second charge of 0.039 parts methylene bis(4-cyclohexylisocyanate) was added to complete the reaction and provide Silicone Polyurea Polymer solution at 25% solids by weight.

A pressure sensitive adhesive (PSA) composition was prepared by combining 61 parts Silicone Polyurea Polymer prepared above, 39.1 parts MQ Resin F solution (as described in U.S. Patent No. 6,730,397), and 1.5 parts mineral oil (available under the trade name BRITOL 20, from CK Witco Corp., located in Petrolia, Pennsylvania), diluted to 25% solids in a mixture of 80 parts toluene, and 20 parts 2-propanol (IPA). The solution was mixed well at room temperature (about 22°C) to provide an adhesive solution. The adhesive solution was knife-coated and dried in a forced-air oven for 3 minutes at 70°C. The finished adhesive transfer tape was 51 microns (2 mils) thick, and is designated adhesive "A-I".

### Adhesive II (A-II)

Adhesive II is a 0.051 mm (2 mil thick) acrylic adhesive transfer tape available under the trade designation 9671LE from 3M Company.

### Foams

### Foam I (F-I)

60 parts IOA, 40 parts IBOA, and 0.24% IRGACURE 651 (available from Ciba Specialty Chemicals, located in Tarrytown, New York) were added to a glass jar. The jar was shaken for approximately one hour to dissolve the IRGACURE 651.

Nitrogen was vigorously bubbled through the solution for 30 minutes to purge the solution. The nitrogen flow was reduced to a slow bubble and the UV light source (Sylvania 350 Blacklight, F15T8/350BL, 15 watt bulb) was turned on. The jar was swirled gently approximately 10-20 cm (4-8 in.) from the bulb for several seconds until the viscosity of the solution was between 180 and 2600 cps.

The nitrogen supply was shut off and the lid of the jar was removed. The jar was allowed to stand open for 10-15 seconds to allow air to re-enter the space above the solution. The lid was placed back on the jar and the jar shaken vigorously for 10-15 seconds to re-oxygenate the solution. The solution was then allowed to cool for 30 minutes.

After the solution had cooled, 0.13% HDDA was added and the jar was shaken for 30 minutes. A total of 2% by weight AEROSIL 972 (available from Degussa Corporation, located in Ridgefield Park, New Jersey) was added to the solution in three separate additions with mixing after each addition. A total of 8% by weight glass bubbles (available under the trade name SCOTCHLITE K15 from 3M Company) were added in three separate additions with mixing after each addition. The solution was mixed overnight to ensure that the AEROSIL 972 and glass bubbles were thoroughly blended into the solution.

To this solution was added 1.3% by weight F-50D microspheres. The solution was mixed with an air mixer and degassed.

The solution was knife-coated onto a 0.038 mm (1.5 mils) UV transparent PET liner and then overlaid with another 0.038 mm (1.5 mils) UV transparent PET liner. The knife coating gap was 0.86 millimeters (34 mils). This dual linered system was cured by simultaneously exposing both sides to UV lights at an average intensity of 3.72 mW/cm² per side and with a total average energy of 625 mJ/cm² per side. The UV lights had 90% of their emission spectra between 300 and 400 nm with a maximum peak intensity at 351 nm.

### Foam II (F- II)

A white polyethylene foam having a thickness of 0.787 mm (0.031 in.), and a density of 0.1g/cm³ (6 pounds per cubic foot (pcf)), available under the trade designation of T-CELL, from Rogers Corporation, located in Elk Grove Village, Illinois.

### Foam III (F-III)

A white polyethylene/ethylene vinyl acetate foam having a thickness of 0.787 mm (0.031 in.), and a density of 0.1g/cm³ (6 pcf), available under the trade designation of T-CELL, from Rogers Corporation.

### Foam IV (F-IV)

A black polyethylene foam having a thickness of 0.787 mm (0.031 in.), and a density of 0.1 g/cm³ (6 pcf), available under the trade designation of T-CELL from Rogers Corporation.

### Foam V (F-V)

A black polyethylene/ethylene vinyl acetate foam having a thickness of 0.787 mm (0.031 in.), and a density of 0.1g/cm³ (6 pcf), available under the trade designation of T-CELL from Rogers Corporation.

### Sample Preparation Procedure

The substrate, adhesive and primer used to prepare the examples and comparative examples are designated in following tables.

The primer solution was applied to a surface of the substrate with a brush. The carrier solvent was evaporated in an air-circulating oven at 70°C for three minutes. The wet coating weight of the primer was approximately 21 grams per square meter.

Laminates of the adhesive, primer, and foam were prepared by placing an adhesive layer on one side of the foam, rolling down the adhesive layer by hand with a rubber roller, and then passing the composite through a laminator (Hot Roll Laminator Model HL-1000, available from Chemsultants International, Inc., located in Mentor, Ohio) at a speed of one meter per minute, with the temperature set at 110°C (230°F), and the pressure set at 0.138 MPa (20 pounds per square inch (psi).

Comparative Example C1 was prepared by placing adhesive A-I on an unprimed surface of foam F-I, rolling down the adhesive layer by hand with a rubber roller, and passing the composite through the Model HL-1000 Hot Roll Laminator at a speed of one meter per minute, with the temperature set at 110°C (230°F), and the pressure set at 0.138 MPa (20 psi).

Example 1 and Comparative Examples C2-C4 were prepared following the Sample Preparation Procedure, using adhesive A-I, foam F-I and the primers listed in Table 1.

Example 1 and Comparative Examples C1-C4 were tested using the 90 Degree Peel Adhesion, 180 Degree T-Peel and 70°C Shear Tests. The results are reported in Table 1. For the 90 Degree Peel Adhesion test, the backing material for Comparative Example C1 and Example 1 was aluminum foil, while the backing material for Comparative Examples C2-C4 was polyester film.

**Table 1**

| | | | | 90 Degree Peel | 180 Degree T-Peel | 70 Shear |
|---|---|---|---|---|---|---|
| Example | Adh | Foam | Primer | N/cm | N/cm | minutes |
| C1 | A-I | F-I | none | 39.2 | 6.1 | 45 |
| 1 | A-I | F-I | P-I | 51.5 | 14.5 | 10080 |
| C2 | A-I | F-I | P-II | 28.9 | 4.4 | 15 |
| C3 | A-I | F-I | P-III | 22.9 | 3.9 | 23 |
| C4 | A-I | F-I | P-IV | 11.6 | 3.9 | 19 |

Comparative Example C5 was prepared in the same manner as Comparative Example C1.

Examples 2-9 were prepared following the Sample Preparation Procedure, using adhesive A-I, foam F-I and the primers listed in Table 2.

Comparative Example C5 and Examples 2-9 were tested using the 90 Degree Peel Adhesion (using polyester as the backing), 180 Degree T-Peel and 70°C Shear Tests. The results are reported in Table 2.

**Table 2**

| | | | | 90 Degree Peel | 180 Degree T-Peel | 70 Shear |
|---|---|---|---|---|---|---|
| Example | Adh | Foam | Primer | N/cm | N/cm | minutes |
| C5 | A-I | F-I | none | 53.9 | 9.8 | 24 |
| 2 | A-I | F-I | P-I | 42.4 | 13.5 | 10060 |
| 3 | A-I | F-I | P-I | 16.1 | 17.0 | 9911 |
| 4 | A-I | F-I | P-I | 11.9 | 15.8 | 20030 |
| 5 | A-I | F-I | P-V | 12.6 | 8.2 | 2617 |
| 6 | A-I | F-I | P-V | 20.0 | 16.1 | 13192 |
| 7 | A-I | F-I | P-VI | 30.5 | 10.3 | 15 |
| 8 | A-I | F-I | P-VII | 37.1 | 12.3 | 211 |
| 9 | A-I | F-I | P-VIII | 19.6 | 12.4 | 1524 |

Comparative Examples C6 was prepared in the same manner as Comparative Example C1, except that foam F-II was used.

Comparative Examples C7 was prepared in the same manner as Comparative Example C1, except that foam F-III was used.

Examples 10 and 11 were prepared following the Sample Preparation Procedure, using adhesive A-I, primer P-I and the foams listed in Table 3.

Comparative Example C6 and C7, and Examples 10 and 11 were tested using the 90 Degree Peel Adhesion (using polyester as the backing), 180 Degree T-Peel and 70°C Shear Tests. The results are reported in Table 3.

**Table 3**

| | | | | 90 Degree Peel | 180 Degree T-Peel | 70 Shear |
|---|---|---|---|---|---|---|
| Example | Adh | Foam | primer | N/cm | N/cm | minutes |
| C6 | A-I | F-II | none | 13.5 | 0.4 | 6 |
| 10 | A-I | F-II | P-1 | 10.5 | 3.5 | 10060 |
| C7 | A-I | F-III | none | 11.4 | 0.4 | 6711 |
| 11 | A-I | F-III | P-1 | 19.3 | 6.7 | 10060 |

Examples 12-15 were prepared following the Sample Preparation Procedure, using adhesive A-I, and the primers and foams listed in Table 4.

Examples 12-15 were tested using the 90 Degree Peel Adhesion (using polyester as the backing) and the180 Degree T-Peel Tests. Examples 14 and 15 were also tested using the 70°C Shear Test. The results are reported in Table 4.

**Table 4**

| | | | | 90 Degree Peel | 180 Degree T-Peel | 70 Shear |
|---|---|---|---|---|---|---|
| Example | Adh | Foam | primer | N/cm | N/cm | minutes |
| 12 | A-I | F-IV | P-IX | 1.1 | 1.6 | * |
| 13 | A-I | F-V | P-IX | 8.8 | 3.7 | * |
| 14 | A-I | F-I | P-X | 33.8 | 8.1 | 171 |
| 15 | A-I | F-I | P-XI | 28.9 | 8.1 | 117 |

| | | | | | | |
|---|---|---|---|---|---|---|
| * sample was not tested | | | | | | |

Comparative Examples C8 and C9 were prepared in the same manner as Comparative Example C1, except that adhesive A-II was used.

Examples 16-21 were prepared following the Sample Preparation Procedure, using adhesive A-II, foam F-I, and the primers listed in Table 5.

Comparative Examples C8 and C9, and Examples 16-21 were tested using the 90 Degree Peel Adhesion (using polyester as the backing), 180 Degree T-Peel and 70°C Shear Tests. The results are reported in Table 5.

**Table 5**

| | | | | 90 Degree Peel | 180 Degree T-Peel | 70 Shear |
|---|---|---|---|---|---|---|
| Example | Adh | Foam | primer | N/cm | N/cm | minutes |
| C8 | A-II | F-I | none | 19.3 | 5.6 | 14 |
| C9 | A-II | F-I | none | 20.5 | 6.3 | 16 |
| 16 | A-II | F-I | P-I | 17.0 | 12.3 | 40625 |
| 17 | A-II | F-I | P-I | 26.8 | 11.9 | 10116 |
| 18 | A-II | F-I | P-V | 28.4 | 11.6 | 40625 |
| 19 | A-II | F-I | P-V | 22.2 | 10.9 | 10163 |
| 20 | A-II | F-I | P-VI | 35.5 | 7.4 | 11 |
| 21 | A-II | F-I | P-XII | 42.0 | 8.6 | 22 |

Examples 22-25 were prepared following the Sample Preparation Procedure, using adhesive A-I, foam F-I, and the primers listed in Table 6.

Examples 22-25 were tested using the 90 Degree Peel Adhesion (using aluminum foil as the backing), 180 Degree T-Peel and 70°C Shear Tests. The results are reported in Table 6.

**Table 6**

| | | | | 90 Degree Peel | 180 Degree T-Peel | 70 Shear |
|---|---|---|---|---|---|---|
| Example | Adh | Foam | primer | N/cm | N/cm | minutes |
| 22 | A-I | F-I | P-XIII | 32.0 | 11.7 | 6377 |
| 23 | A-I | F-I | P-XIV | 32.4 | 10.7 | 3612 |
| 24 | A-I | F-I | P-XV | 41.8 | 10.3 | 4348 |
| 25 | A-I | F-I | P-XVI | 44.1 | 10.0 | 3196 |

Various modifications and alterations of this invention will become apparent to those skilled in the art without departing from the scope and spirit of this invention.

## Claims

1. An adhesive article comprising:
(a) a first substrate comprising a first major surface;
(b) a first adhesive, wherein the first adhesive comprises no more than 3% by weight acrylic acid repeat units; and
(c) a first primer interposed between at least a portion of the first major surface of the substrate and at least a portion of the adhesive, wherein the first primer consists essentially of nanoparticles, wherein a primer consisting essentially of nanoparticles is free of an effective amount of a component that reacts with the first adhesive or the first substrate and any polymeric binders, wherein an effective amount is an amount sufficient to increase adhesion of the first adhesive to the first substrate.

2. An adhesive article comprising:
(a) a foam substrate;
(b) a first adhesive; and
(c) a first primer interposed between the foam substrate and the first adhesive, wherein the primer consists essentially of nanoparticles, wherein the first primer consists essentially of nanoparticles, wherein a primer consisting essentially of nanoparticles is free of an effective amount of a component that reacts with the first adhesive or the first substrate and any polymeric binders, wherein an effective amount is an amount sufficient to increase adhesion of the first adhesive to the first substrate.

3. The adhesive article of claim 2, wherein the foam comprises a polymer selected from the group consisting of: acrylic, polyethylene, ethylene vinyl acetate, and combinations thereof.

4. The adhesive article of any one of the preceding claims, wherein the first adhesive comprises at least one of: silicone polyurea and acrylate.

5. The adhesive article of any one of the preceding claims, wherein the nanoparticles have a maximum cross-sectional dimension of no more than 20 nanometers.

6. The adhesive article of any one of the preceding claims, wherein the nanoparticles are selected from the group consisting of: silica, ceria, iron oxide, and combinations thereof.

7. The adhesive article of any one of the preceding claims, wherein the nanoparticles are surface modified.

8. The adhesive article of any one of the preceding claims, further comprising a second primer interposed between at least a portion of the second major surface of the substrate and at least a portion of a second adhesive.

9. The adhesive article of any one of the preceding claims, further comprising a second primer interposed between at least a portion of a first major surface of a second substrate and at least a portion of the first adhesive.

10. A method of bonding an adhesive layer to a foam substrate comprising:
(a) interposing a primer consisting essentially of nanoparticles between a first major surface of the foam substrate and a first major surface of the adhesive layer;
(b) adhering at least a portion of the first major surface of the foam substrate to the primer; and
(c) adhering at least a portion of the first major surface of the adhesive layer to the primer, wherein the first primer consists essentially of nanoparticles, wherein a primer consisting essentially of nanoparticles is free of an effective amount of a component that reacts with the first adhesive or the first substrate and any polymeric binders, wherein an effective amount is an amount sufficient to increase adhesion of the first adhesive to the first substrate.

11. A method of bonding an adhesive layer to a substrate comprising:
(a) interposing a primer consisting essentially of nanoparticles between a first major surface of the substrate and a first major surface of the adhesive layer, wherein the adhesive layer comprises no more than 3% by weight acrylic acid repeat units;
(b) adhering at least a portion of the first major surface of the substrate to the primer; and
(c) adhering at least a portion of the first major surface of the adhesive layer to the primer, wherein the first primer consists essentially of nanoparticles, wherein a primer consisting essentially of nanoparticles is free of an effective amount of a component that reacts with the first adhesive or the first substrate and any polymeric binders, wherein an effective amount is an amount sufficient to increase adhesion of the first adhesive to the first substrate.

## Patentansprüche

1. Klebeartikel, mit:
(a) einem ersten Substrat, das eine erste Hauptfläche umfasst;
(b) einem ersten Klebstoff, wobei der erste Klebstoff nicht mehr als 3 Gew.-% Acrylsäure-Repetiereinheiten umfasst; und
(c) einer ersten Grundierung, die zwischen mindestens einem Teil der ersten Hauptfläche des Substrats und mindestens einem Teil des Klebstoffs zwischengelegt ist, wobei die erste Grundierung im Wesentlichen aus Nanopartikeln besteht, wobei eine Grundierung, die im Wesentlichen aus Nanopartikeln besteht, frei von einer wirksamen Menge eines Bestandteils, der mit dem ersten Klebstoff oder dem ersten Substrat reagiert, und polymeren Bindemitteln ist, wobei eine wirksame Menge eine Menge ist, die hinreichend ist, um die Haftung des ersten Klebstoffs an dem ersten Substrat zu erhöhen.

2. Klebeartikel, mit:
(a) einem Schaumsubstrat;
(b) einem ersten Klebstoff und
(c) einer ersten Grundierung, die zwischen dem Schaumsubstrat und dem ersten Klebstoff zwischengelegt ist, wobei die Grundierung im Wesentlichen aus Nanopartikeln besteht, wobei die erste Grundierung im Wesentlichen aus Nanopartikeln besteht, wobei eine Grundierung, die im Wesentlichen aus Nanopartikeln besteht, frei von einer wirksamen Menge eines Bestandteils; der mit dem ersten Klebstoff oder dem ersten Substrat reagiert, und polymeren Bindemitteln ist, wobei eine wirksame Menge eine Menge ist, die hinreichend ist, um die Haftung des ersten Klebstoffs an dem ersten Substrat zu erhöhen.

3. Klebeartikel nach Anspruch 2, wobei der Schaum ein Polymer umfasst, das ausgewählt ist aus der Gruppe bestehend aus Acryl, Polyethylen, EthylenVinylacetat und Kombinationen davon.

4. Klebeartikel nach einem beliebigen der vorhergehenden Ansprüche, wobei der erste Klebstoff mindestens eine der Verbindungen Silikon-Polyharnstoff und Acrylat umfasst.

5. Klebeartikel nach einem beliebigen der vorhergehenden Ansprüche, wobei die Nanopartikel eine maximale Querschnittsabmessung von nicht mehr als 20 Nanometern aufweisen.

6. Klebeartikel nach einem beliebigen der vorhergehenden Ansprüche, wobei die Nanopartikel ausgewählt sind aus der Gruppe bestehend aus: Siliciumdioxid, Cerdioxid, Eisenoxid und Kombinationen davon.

7. Klebeartikel nach einem beliebigen der vorhergehenden Ansprüche, wobei die Nanopartikel oberflächenmodifiziert sind.

8. Klebeartikel nach einem beliebigen der vorhergehenden Ansprüche, der ferner eine zweite Grundierung umfasst, die zwischen mindestens einem Teil der zweiten Hauptfläche des Substrats und mindestens einem Teil eines zweiten Klebstoffs zwischengelegt ist.

9. Klebeartikel nach einem beliebigen der vorhergehenden Ansprüche, der ferner eine zweite Grundierung umfasst, die zwischen mindestens einem Teil einer ersten Hauptfläche eines zweiten Substrats und mindestens einem Teil des ersten Klebstoffs zwischengelegt ist.

10. Verfahren zum Verkleben einer Klebstoffschicht mit einem Schaumsubstrat, mit:
(a) Zwischenlegen einer Grundierung, die im Wesentlichen aus Nanopartikeln besteht, zwischen eine erste Hauptfläche des Schaumsubstrats und eine erste Hauptfläche der Klebstoffschicht;
(b) Kleben mindestens eines Teils der ersten Hauptfläche des Schaumsubstrats auf die Grundierung und
(c) Kleben mindestens eines Teils der ersten Hauptfläche der Klebstoffschicht auf die Grundierung, wobei die erste Grundierung im Wesentlichen aus Nanopartikeln besteht, wobei eine Grundierung, die im Wesentlichen aus Nanopartikeln besteht, frei von einer wirksamen Menge eines Bestandteils, der mit dem ersten Klebstoff oder dem ersten Substrat reagiert, und polymeren Bindemitteln ist, wobei eine wirksame Menge eine Menge ist, die hinreichend ist, um die Haftung des ersten Klebstoffs an dem ersten Substrat zu erhöhen.

11. Verfahren zum Verkleben einer Klebstoffschicht mit einem Substrat, mit:
(a) Zwischenlegen einer Grundierung, die im Wesentlichen aus Nanopartikeln besteht, zwischen eine erste Hauptfläche des Substrats und eine erste Hauptfläche der Klebstoffschicht, wobei die Klebstoffschicht nicht, mehr als 3 Gew.-% Acrylsäure-Repetiereinheiten umfasst;
(b) Kleben mindestens eines Teils der ersten Hauptfläche des Substrats auf die Grundierung und
(c) Kleben mindestens eines Teils der ersten Hauptfläche der Klebstoffschicht auf die Grundierung, wobei die erste Grundierung im Wesentlichen aus Nanopartikeln besteht, wobei eine Grundierung, die im Wesentlichen aus Nanopartikeln besteht, frei von einer wirksamen Menge eines Bestandteils, der mit dem ersten Klebstoff oder dem ersten Substrat reagiert, und polymeren Bindemitteln ist, wobei eine wirksame Menge eine Menge ist, die hinreichend ist, um die Haftung des ersten Klebstoffs an dem ersten Substrat zu erhöhen.

## Revendications

1. Article adhésif comprenant :
(a) un premier substrat comprenant une première surface principale ;
(b) un premier adhésif, le premier adhésif ne comprenant pas plus de 3% en poids de motifs récurrents d'acide acrylique ; et
(c) un premier apprêt, intercalé entre au moins une partie de la première surface principale du substrat et au moins une partie de l'adhésif, le premier apprêt étant essentiellement constitué de nanoparticules, un apprêt essentiellement constitué de nanoparticules ne contenant pas une quantité efficace d'un constituant qui réagit avec le premier adhésif ou le premier substrat, ni de liants polymères, une quantité efficace étant une quantité suffisante pour augmenter l'adhérence du premier adhésif au premier substrat.

2. Article adhésif comprenant :
(a) un substrat en mousse ;
(b) un premier adhésif ; et
(c) un premier apprêt, intercalé entre le substrat en mousse et le premier adhésif, l'apprêt étant essentiellement constitué de nanoparticules, le premier apprêt étant essentiellement constitué de nanoparticules, un apprêt essentiellement constitué de nanoparticules ne contenant pas une quantité efficace d'un constituant qui réagit avec le premier adhésif ou le premier substrat, ni de liants polymères, une quantité efficace étant une quantité suffisante pour augmenter l'adhérence du premier adhésif au premier substrat.

3. Article adhésif selon la revendication 2, dans lequel la mousse comprend un polymère choisi dans le groupe constitué par : un acrylique, un polyéthylène, un éthylène-acétate de vinyle, et leurs combinaisons.

4. Article adhésif selon l'une quelconque des revendications précédentes, dans lequel le premier adhésif comprend au moins un des produits suivants : silicone polyurée et acrylate.

5. Article adhésif selon l'une quelconque des revendications précédentes, dans lequel les nanoparticules ont une dimension maximale en section transversale inférieure ou égale à 20 nanomètres.

6. Article adhésif selon l'une quelconque des revendications précédentes, dans lequel les nanoparticules sont choisies dans le groupe constitué par : la silice, l'oxyde cérique, l'oxyde de fer, et leurs combinaisons.

7. Article adhésif selon l'une quelconque des revendications précédentes, dans lequel les nanoparticules sont modifiées en surface.

8. Article adhésif selon l'une quelconque des revendications précédentes, comprenant en outre un second apprêt intercalé entre au moins une partie de la seconde surface principale du substrat et au moins une partie d'un second adhésif.

9. Article adhésif selon l'une quelconque des revendications précédentes, comprenant en outre un second apprêt intercalé entre au moins une partie d'une première surface principale d'un second substrat et au moins une partie du premier adhésif.

10. Procédé de collage d'une couche adhésive sur un substrat en mousse comprenant les étapes consistant à :
(a) intercaler un apprêt essentiellement constitué de nanoparticules entre une première surface principale du substrat en mousse et une première surface principale de la couche adhésive ;
(b) coller au moins une partie de la première surface principale du substrat en mousse à l'apprêt ; et
(c) coller au moins une partie de la première surface principale de la couche adhésive à l'apprêt, le premier apprêt étant essentiellement constitué de nanoparticules, un apprêt essentiellement constitué de nanoparticules ne contenant pas une quantité efficace d'un constituant qui réagit avec le premier adhésif ou le premier substrat ni de liants polymères, une quantité efficace étant une quantité suffisante pour augmenter l'adhérence du premier adhésif au premier substrat.

11. Procédé de collage d'une couche adhésive à un substrat comprenant les étapes consistant à :
(a) intercaler un apprêt essentiellement constitué de nanoparticules entre une première surface principale du substrat et une première surface principale de la couche adhésive, la couche adhésive ne comprenant pas plus de 3% en poids de motifs récurrents d'acide acrylique ;
(b) coller au moins une partie de la première surface principale du substrat à l'apprêt ; et
(c) coller au moins une partie de la première surface principale de la couche adhésive à l'apprêt, le premier apprêt étant essentiellement constitué de nanoparticules, un apprêt essentiellement constitué de nanoparticules ne contenant pas une quantité efficace d'un constituant qui réagit avec le premier adhésif ou le premier substrat, ni de liants polymères, une quantité efficace étant une quantité suffisante pour augmenter l'adhérence du premier adhésif au premier substrat.
